(19) Europäisches Patentamt
European Patent Office
Office européen des brevets

(11) **EP 3 043 586 A1**

(12) **EUROPEAN PATENT APPLICATION**
published in accordance with Art. 153(4) EPC

(43) Date of publication:
**13.07.2016 Bulletin 2016/28**

(51) Int Cl.:
***H04W 16/10*** (2009.01)

(21) Application number: **13893078.9**

(22) Date of filing: **05.09.2013**

(86) International application number:
**PCT/CN2013/083030**

(87) International publication number:
**WO 2015/032061 (12.03.2015 Gazette 2015/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Fujitsu Limited
Kawasaki-shi, Kanagawa 211-8588 (JP)**

(72) Inventors:
• **FAN, Xiaojing
Beijing 100025 (CN)**

• **WANG, Hao
Beijing 100025 (CN)**
• **TIAN, Jun
Beijing 100025 (CN)**
• **YI, Longteng
Beijing 100025 (CN)**

(74) Representative: **Cooper-Rolfe, Elizabeth Louise
Haseltine Lake LLP
Lincoln House, 5th Floor
300 High Holborn
London WC1V 7JH (GB)**

(54) **BEACON FRAME SENDING METHOD AND APPARATUS**

(57) Embodiments of the present disclosure provide a method and apparatus for transmitting a beacon frame. In an embodiment, the method includes: determining an operating channel by channel scanning; handing over to an overlapped large channel if there exists no cluster in the operating channel and there exists the overlapped large channel which is overlapped with the operating channel and has a channel bandwidth larger than that of the operating channel, determining cluster control information and a beacon scheduling period of the overlapped large channel, and transmitting a beacon frame comprising the cluster control information of the overlapped large channel at a beacon scheduling period in each beacon interval of the overlapped large channel; and handing over to the operating channel, building a cluster in the operating channel, determining cluster control information and a beacon scheduling period of the operating channel, a cluster interval of the operating channel being different from that of the overlapped large channel, and transmitting a beacon frame comprising the cluster control information of the operating channel at a beacon scheduling period in each beacon interval of the operating channel. With the present disclosure, interference between overlapped large channels may be lowered.

401

an operating channel is determined by channel scanning

402

a beacon frame is transmitted in an overlapped large channel overlapping with the operating channel and having a channel bandwidth greater than that of the operating channel

403

the beacon frame is transmitted in the operating channel

Fig. 4

EP 3 043 586 A1

**Description**

<u>Field</u>

The present disclosure relates to the field of communications, and in particular to a method and an apparatus for transmitting a beacon frame.

<u>Background</u>

Both the IEEE (Institute of Electrical and Electronics Engineers) 802.11ad Standard and 60 GHz Standard in China proposed by CWPAN (China Wireless Personal Access Network) include communication in 45 GHz band. In the 60 GHz and 45 GHz bands, new channel division contains multiple bandwidths, and channels of different bandwidths may possibly overlap with each other.

It was found by the inventors in the implementation of this disclosure that as there are cases where channels of different bandwidths overlap with each other, interference may possibly be produced between devices operating in the overlapped channels of different bandwidths. How to support such dynamic bandwidths and lower interference between the overlapped channels is urgent to be solved in the industry.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

<u>Summary</u>

An embodiment of the present disclosure is to provide a method and apparatus for transmitting a beacon frame, so as to support dynamic bandwidths and lower interference between overlapped channels.

According to a first aspect of the embodiments of the present disclosure, there is provided a method for transmitting a beacon frame, including:

determining an operating channel by channel scanning;

switching to an overlapped large channel if there exists no cluster in the operating channel and there exists the overlapped large channel which is overlapped with the operating channel and has a channel bandwidth larger than that of the operating channel, determining cluster control information and a beacon scheduling period of the overlapped large channel, and transmitting a beacon frame including the cluster control information of the overlapped large channel at a beacon scheduling period in each beacon interval of the overlapped large channel; and

switching to the operating channel, building a cluster in the operating channel, determining cluster control information and a beacon scheduling period of the operating channel, a cluster interval of the operating channel being different from that of the overlapped large channel, and transmitting a beacon frame including the cluster control information of the operating channel at a beacon scheduling period in each beacon interval of the operating channel.

According to a second aspect of the embodiments of the present disclosure, there is provided a control node, including:

a scanning unit configured to scan available channels so as to determine an operating channel;

a first transmitting unit configured to switch to an overlapped large channel if there exists no cluster in the operating channel and there exists the overlapped large channel which is overlapped with the operating channel and has a channel bandwidth larger than that of the operating channel, determine cluster control information and a beacon scheduling period of the overlapped large channel, and transmit a beacon frame including the cluster control information of the overlapped large channel at a beacon scheduling period in each beacon interval of the overlapped large channel; and

a second transmitting unit configured to switch to the operating channel after the first transmitting unit finishes the transmission of the beacon frame, build a cluster in the operating channel, determine cluster control information and a beacon scheduling period of the operating channel, a cluster interval of the operating channel being different from that of the overlapped large channel, and transmit a beacon frame including the cluster control information of the operating channel at a beacon scheduling period in each beacon interval of the operating channel.

According to another aspect of the embodiments of the present disclosure, there is provided a computer-readable program, wherein when the program is executed in a control node, the program enables a computer to carry out the method for transmitting a beacon frame as described in the first aspect in the control node.

According to a further aspect of the embodiments of the present disclosure, there is provided a storage medium in which a computer-readable program is stored, wherein the computer-readable program enables a computer to carry out the method for transmitting a beacon frame as described in the first aspect in a control node.

An advantage of the embodiments of the present disclosure exists in that with the method and apparatus of the embodiments of the present disclosure, synchronization control nodes of small channel clusters join in the large channel cluster, and determine a beacon scheduling period of a small channel according to a beacon scheduling period of the large channel cluster, thereby the transmission of the beacons of the small channel can be staggered with the beacon scheduling period of the large channel and the interference can be lowered.

With reference to the following description and drawings, the particular embodiments of the present disclosure are disclosed in detail, and the principle of the present disclosure and the manners of use are indicated. It should be understood that the scope of the embodiments of the present disclosure is not limited thereto. The embodiments of the present disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated or reduced. Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

FIG. 1 is a schematic diagram of channel division of 45 GHz band;
FIG. 2 is a schematic diagram of channel division of 60 GHz band;
FIG 3 is a schematic diagram of a cluster mechanism of the IEEE 802.11ad Standard;
FIG. 4 is a flowchart of the method for transmitting a beacon frame of an embodiment of the present disclosure;
FIG 5 is a schematic diagram of a beacon frame transmission pattern of an embodiment of the present disclosure;
FIG. 6A is a schematic diagram of a scheduling information denoting format of the IEEE 802.11ad;
FIG 6B is a schematic diagram of a scheduling information control field format of the IEEE 802.11ad;
FIG. 7 is a schematic diagram of comparison between a beacon interval of an operating channel and a beacon interval of an overlapped large channel; and
FIG. 8 is a schematic diagram of a structure of the control node of an embodiment of the present disclosure.

Detailed Description

These and further aspects and features of embodiments of the present disclosure will be apparent with reference to the following description and attached drawings. These embodiments are illustrative only, and are not intended to limit the present disclosure.

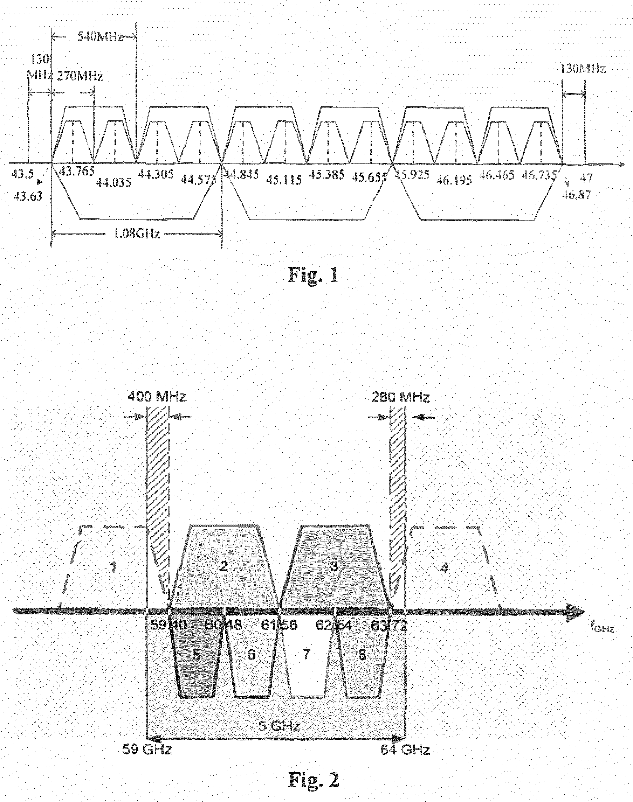

FIG. 1 is a schematic diagram of possible channel division of 45 GHz band. As shown in FIG. 1, the 45 GHz band may possibly be divided into channels of three bandwidths, that is, three channels with 1.08 GHz, six channels with 540 MHz, and twelve channels with 270 MHz. It can be seen from the figure that each of the channels with 1.08 GHz overlaps with two channels with 540 MHz, and each of the channels with 540 MHz overlaps with two channels with 270 MHz.

FIG. 2 is a schematic diagram of possible channel division of 60 GHz band. As shown in FIG. 2, the channel division of 60 GHz band may possibly include two large channels with 2.16 GHz or four small channels with 1.08 GHz. Channel indices are as shown in FIG. 2, in which small channels 5 and 6 overlap a large channel 2, and small channels 7 and 8 overlap a large channel 3.

In order that principles of embodiments of the present disclosure are easily understood by those skilled in the art, the method and apparatus for transmitting a beacon frame of the embodiments of the present disclosure shall be described taking the channel division of 60 GHz band shown in FIG. 2 as an example. However, the embodiments of the present disclosure are not limited to the manner of channel division shown in FIG 2, and are also applicable to other manners of channel division concerning with channel overlapping.

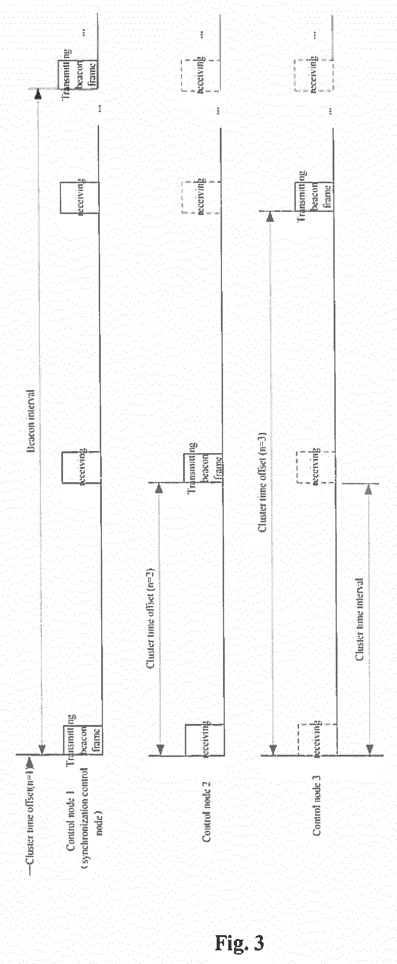

FIG. 3 is a schematic diagram of a cluster building and maintaining method provided in the current IEEE 802.11ad Standard. As shown in FIG. 3, in the 802.11ad Standard, a concept of cluster is given. A cluster consists of at least one network control node (briefly referred to as a control node, such as an AP (access point), and a PCP (personal basic service set control point), etc.). In a case where there exists no cluster, a control node having an ability to support a cluster builds a cluster, and as a synchronization control node of the cluster, the control node may determine a maximum number of cluster members that can be accommodated (ClusterMaxMem, CMM) and a beacon interval (BI).

In this example, each beacon interval is divided into multiple sections according to the number of cluster members, each section of time interval being referred to as a cluster time interval (ClusterTimeInterv, CTI), and also being referred to as a cluster interval, that is,

$$ClusterTimeInterv = BeaconInterval \div ClusterMaxMem.$$

And in a beacon interval, scheduling periods of beacon frames are respectively ClusterTimeOffset(n), where, n=1.2,... ClusterMaxMem. Transmission of the beacon frames is permitted starting from the scheduling periods of the beacon frames; where,

$$ClusterTimeOffset(n) = (n-1) \times ClusterTimeInterv.$$

In this example, a beacon scheduling period of the synchronization control node may be set as ClusterTime-Offset(1). When other control nodes join in the cluster established by the synchronization control node as members, they monitor the channels first, so as to receive beacon frames transmitted by the synchronization control node, and obtain synchronization information such as a beacon interval, and a cluster time interval, etc. After synchronization with the synchronization control node is completed, each of the control nodes monitors subsequent beacon scheduling periods ClusterTimeOffset(n) (n= 2, 3 ...ClusterMaxMem), and selects an idle one from the beacon scheduling periods as a beacon scheduling period of itself, and sets the beacon interval to be the same as that of the synchronization control node.

The method and apparatus for transmitting a beacon frame of the embodiments of the present disclosure shall be described below with reference to the accompanying drawings and particular embodiments.

Embodiment 1

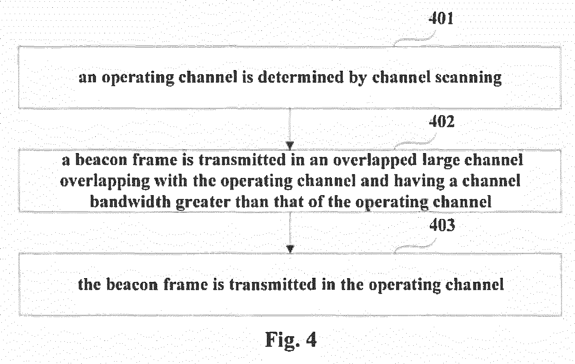

An embodiment of the present disclosure provides a method for transmitting a beacon frame. FIG. 4 is a flowchart of the method. The method is applicable to a control node in a network. As shown in FIG. 4, the method includes:

step 401: an operating channel is determined by channel scanning.

In this step, before a network (BSS, basic service set) is built, each control node of the network needs first to scan channels according to an existing policy of the IEEE 802.11, so as to collect beacon frames transmitted by control nodes of the network existing in the channels, select one channel according to an established policy as the operating channel based on information collected in the channels.

Step 402: a beacon frame is transmitted in an overlapped large channel overlapping with the operating channel and having a channel bandwidth greater than that of the operating channel.

In this step, if there exists no cluster in the selected operating channel (that is, if no beacon frame containing cluster control information is received in the operating channel, a cluster is not built by a control node in the operating channel), and there exists a channel overlapping with the operating channel and having a channel bandwidth greater than that of the operating channel (referred to as an overlapped large channel in the embodiments of the present disclosure for the convenience of description), such as a small channel of 1.08 GHz shown in FIG 2, the control node hands over to the overlapped large channel, determines cluster control information and a beacon scheduling period of the overlapped large channel, and transmits a beacon frame containing the cluster control information of the overlapped large channel at the beacon scheduling period of each beacon interval of the overlapped large channel.

In an implementation, there exists a cluster in the overlapped large channel, and in such a case, the control node may join in the cluster as a member, determine the cluster control information of the overlapped large channel and the beacon scheduling period of itself by monitoring the overlapped large channel, and transmit the beacon frame containing the cluster control information of the overlapped large channel at the beacon scheduling period of itself. Here, the beacon frame transmitted by the synchronization control node of the cluster of the overlapped large channel may be received by monitoring the overlapped large channel, and as the beacon frame contains the cluster control information of the overlapped large channel, the cluster control information of the overlapped large channel may be determined according to the beacon frame. Here, idle beacon scheduling periods may be determined by monitoring the overlapped large channel, and the control node may select one from the idle beacon scheduling periods as the beacon scheduling period of itself.

In this implementation, operations of joining the overlapped large channel may be carried out by existing means, which, for example, may include the following:

1. the control node performs synchronization operation according to the cluster control information contained in the received beacon frame of the overlapped large channel, the synchronization operation including determining starting time of the beacon interval, a length of the beacon interval, and a length of a cluster interval, etc.;

2. the control node monitors the beacon scheduling period: switching to the overlapped large channel at each cluster beacon scheduling period of the overlapped large channel, and monitoring the channel; if a beacon frame is received within a MaxBeaconTime, it is judged that the beacon scheduling period is occupied, and if no beacon frame is received when the time expires, it is judged that the beacon scheduling period is not occupied; switching back to the operating channel after a beacon frame is received or the time expires; repeating the above operations, so as to judge whether all the beacon scheduling periods within a beacon interval of the overlapped large channel are occupied; and

3. the control node selects an idle beacon scheduling period: switching to the overlapped large channel at a designated time of a selected beacon scheduling period within each beacon interval of the overlapped large channel, transmitting the beacon frames, and switching back to the operating channel after the transmission is completed.

In this embodiment, the control node switches to the overlapped large channel at each beacon scheduling period of the overlapped large channel, monitors and judges whether the beacon scheduling period is idle, and switches back to the operating channel after the monitoring and judgment are completed. In this way, after a beacon interval is repeated, the control node selects an idle beacon scheduling period, switches to the overlapped large channel to transmit the beacon frame when the beacon scheduling period starts. After the beacon frame is transmitted, the control node switches back to the operating channel, and thereafter, the channel handover and transmission of beacon frame are repeated periodically. In this embodiment, after synchronization of the control node and the synchronization control node of the cluster of the overlapped large channel is completed, the control node needs to switch to the overlapped large channel at each beacon scheduling period (ClusterTimeOffset(n) (n= 2, 3 ...ClusterMaxMem)) to monitor the MaxBeaconTime (the maximum beacon transmission time), judges whether the beacon scheduling period is idle after the monitoring is completed, and switches back to the operating channel.

In this implementation, after the control node joins in the cluster of the overlapped large channel, it switches periodically to the overlapped large channel at the selected beacon scheduling period and transmit the beacon frame. Furthermore, the control node may also switch to the overlapped large channel at all other beacon scheduling periods to monitor, that is, receiving beacon frame, and switch back to the operating channel after the beacon frame is received or the MaxBeaconTime (the maximum beacon transmission time) expires. And the control node may also switch to the overlapped large channel only at all other occupied beacon scheduling periods to receive the beacon frame, and switch back to the operating channel after receiving the beacon frame.

In another implementation, there exists no cluster in the overlapped large channel. In such a case, the control node may immediately switch to the overlapped large channel to build a cluster, determine the cluster control information of the overlapped large channel and the beacon scheduling period of itself by building a cluster, and transmit the beacon frame containing the cluster control information of the overlapped large channel at the beacon scheduling period of itself. Here, as the cluster is built by the control node, the control node may directly determine the cluster control information of the overlapped large channel according to a predetermined policy. And as the cluster is built by the control node, all the beacon scheduling periods are idle, as a synchronization control node of the cluster of the overlapped large channel, the control node may select one from the idle beacon scheduling periods as the beacon scheduling period of itself. It usually selects ClusterTimeOffset(1) as its beacon scheduling period.

In this implementation, the operation of building a cluster may also be carried out by existing means, which, for example, may include the following:

1. the control node determines cluster control information such as a beacon interval, a cluster interval, and Cluster-MaxMem, etc., and selects ClusterTimeOffset(1) as the beacon scheduling period of itself;

2. the control node switches to the overlapped large channel immediately, transmits the beacon frame containing the above-determined cluster control information, switches back to the operating channel after the transmission is completed, and thereafter, performs the above transmission of beacon frame in each beacon interval of the overlapped large channel.

In this embodiment, the control node may build the cluster according to the method for building a cluster in IEEE 802.11ad, and after the cluster of the overlapped large channel is built, the control node, as a synchronization control node of the cluster, needs to switch to the overlapped large channel at each beacon scheduling period Cluster-TimeOffset(1) to transmit the beacon frame, and switch back to the operating channel after the transmission is completed. Furthermore, the control node may not switch to the overlapped large channel at other beacon scheduling periods of the cluster to receive the beacon frames, until interference occurs in the transmission in the operating channel in a beacon scheduling period of a cluster of a certain overlapped large channel, which shows that a new control node joins in the cluster in the overlapped large channel, and chooses to transmit a beacon frame at the beacon scheduling period. In such a case, the control node needs to switch to the overlapped large channel at the beacon scheduling period to receive the beacon frame.

In this embodiment, the cluster control information may include a beacon intervals, and a cluster interval, etc., and the embodiments of the present disclosure are not limited thereto. For example, in another embodiment, besides a beacon intervals and a cluster interval, the cluster control information may further include information provided in existing standards, the contents of which being incorporated herein, and being not going to be described herein any further.

Step 403: the beacon frame is transmitted in the operating channel.

In this step, after the control node transmits the beacon frame in the overlapped large channel according to step 402, it switches to its operating channel, and as there exists no cluster in its operating channel, the control node builds a cluster in its operating channel, so as to determine cluster control information of the cluster of the operating channel and the beacon scheduling period of itself, and transmit a beacon frame containing the cluster control information of the cluster of the operating channel at the beacon scheduling period of itself. Here, similar to building a cluster in the overlapped large channel, as the cluster is built by the control node, the control node may directly determine the cluster control information of the overlapped large channel according to a predetermined policy. And as the cluster is built by the control node, all the beacon scheduling periods are idle, and as a synchronization control node of the cluster of the operating channel, the control node may select one from the idle beacon scheduling periods as the beacon scheduling period of itself.

In this embodiment, methods for building the cluster in the operating channel by the control node and transmitting and receiving periodically the beacon frames after the cluster is built are all substantially consistent with those provided in the IEEE 802.11ad Standard, and shall not be described herein any further. And in order to ensure that there exists no interference between the overlapped large channel and the operating channel, when the control node builds the cluster in its operating channel, the cluster interval in its operating channel should be made different from the cluster interval of the above overlapped large channel, so that a device in the overlapped large channel and a device in the operating channel operate in staggered times, thereby avoiding interference.

In another implementation of this embodiment, if it is determined by scanning that there exists a cluster in the operating channel (such as a small channel with 1.08 GHz shown in FIG. 2), that is, the beacon frame containing the cluster control information is received in the operating channel, the control node may join in the cluster of the operating channel as a member. In this implementation, a method for joining in a cluster is identical to that provided in the IEEE 802.11ad Standard, and shall not be described herein any further. And in this implementation, the control node may receive the beacon frame transmitted by the synchronization control node of the cluster in the operating channel by monitoring the operating channel, and may be synchronized with the synchronization control node according to the cluster control information contained in the beacon frame; the control node may select an idle beacon scheduling period from the beacon scheduling periods (ClusterTimeOffset(n), n= 2, 3 ...ClusterMaxMem) by monitoring the operating channel as the beacon scheduling period of itself; and the control node may periodically transmit the beacon frame at the selected beacon scheduling period by using the same beacon interval as the synchronization control node of the cluster of the operating channel.

In this implementation, ClusterTimeOffset(1) has already been occupied by the synchronization control node of the cluster of the operating channel, hence, the control node may only select an idle beacon scheduling period from ClusterTimeOffset(n), (n= 2, 3 ...ClusterMaxMem).

In this implementation, if it is found that interference is relatively large in transmitting the beacon frame at the selected beacon scheduling period, for example, an interference level exceeds a predetermined value, the control node may terminate the transmission of the beacon frame at the selected beacon scheduling period, reselect an idle beacon scheduling period and periodically transmit the beacon frame. That is, the control node may reselect one from idle beacon scheduling periods of the monitored operating channel as the beacon scheduling period for transmitting the beacon frame including the cluster control information of the operating channel, and transmit the beacon frame including the cluster control information of the operating channel at the reselected beacon scheduling period in each beacon interval of the operating channel.

In another implementation of this embodiment, if it is determined by channel scanning that there exists no cluster in the operating channel and there exists no overlapped large channel which is overlapped with the operating channel and has a channel bandwidth larger than that of the operating channel, such as the large channel with 2.16 GHz shown in FIG. 2, the control node may build a cluster in the operating channel. In this implementation, a method for building a cluster is identical to that provided in the IEEE 802.11ad Standard, which is described briefly also in step 402, and shall not be described herein any further. And in this implementation, in the process of building the cluster, the control node may determine cluster control information and a beacon scheduling period of the built cluster of the operating channel, and transmit a beacon frame including the cluster control information of the operating channel at a beacon scheduling period in each beacon interval.

For the above embodiment and implementations to be more clearly understood, the method of this embodiment shall be described below with reference to a beacon frame transmission pattern.

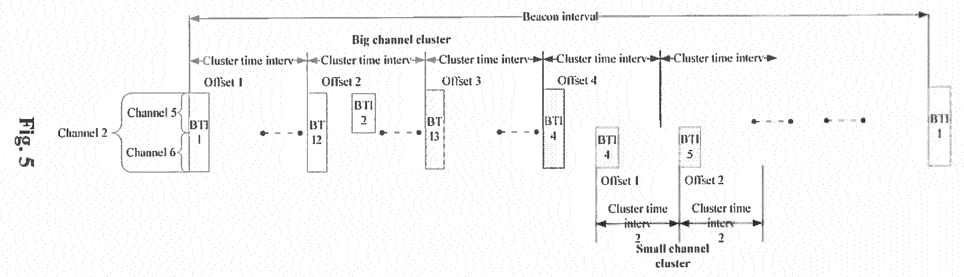

FIG. 5 is a schematic diagram of the beacon frame transmission pattern of this embodiment.

As shown in FIG. 5, both a control node 1 and a control node 3 operate in a channel 2, that is, the channel 2 is an operating channel of the control node 1 and the control node 3. Referring to FIG. 2, as the channel 2 is a large channel relative to channels 5-8 and there exists no channel which is overlapped with the channel 2 and has a channel bandwidth larger than that of the channel 2, if there exists a cluster in the channel 2, the control node 1 and the control node 3 join in the cluster, a method for joining in being as described above, and being not going to be described herein any further; and if there exists no cluster in the channel 2, the control node 1 and the control node 3 may build a cluster in the channel 2, a method for building being as described above, and being not going to be described herein any further. Thus, the control node 1 and the control node 3 may transmit a beacon frame at a respective beacon scheduling period of each beacon interval of the channel 2.

Referring again to FIG. 5, the control node 2 operates in the channel 5, and the control node 4 and the control node 5 operate in the channel 6, that is, the channel 5 is the operating channel of the control node 2, and the channel 6 is the operating channel of the control nodes 4 and 5. Referring to FIG. 2, as the channels 5 and 6 are small channels relative to the channels 2 and 3 and are overlapped with the channel 2, if there exist clusters in the channels 5 and 6, the control nodes 2, 4 and 5 join in the clusters, a method for joining is being as described above, and being not going to be described herein any further; and if there exists no clusters in the channels 5 and 6, the control nodes 2 and 4 first transmit beacon frames containing cluster control information of an overlapped large channel (the channel 2) in the overlapped large channel, and then transmit beacon frames containing cluster control information of an operating channel (the channel 5 or 6) in the operating channel. In the example of FIG. 5, the control node 2 operates in the channel 5, joins in the cluster of the large channel 2, and builds a cluster in the small channel 5, only the node 2 existing in the cluster of the small channel. The nodes 4 and 5 operate in the operating channel 6, the node 4 joins in the cluster of the large channel 2 and builds a cluster in the small channel 6, and the node 5 joins only in the cluster of the small channel 6. In this implementation, if there exists a cluster in the channel 2, the control nodes 2 and 4 may directly join in the cluster after switching to the channel 2 (a method for joining in being as described above, and being not going to be described herein any further), obtain cluster control information of the cluster and beacon scheduling periods of themselves, and transmit a beacon frame containing the cluster control information at the beacon scheduling period of themselves, thereafter, they switch to the operating channel, build a cluster in the operating channel (a method for building being as described above, and being not going to be described herein any further), determine cluster control information of the cluster of the operating channel and beacon scheduling periods of themselves, and transmit a beacon frame containing the cluster control information of the cluster of the operating channel at the beacon scheduling periods of themselves; if there exists no cluster in the channel 2, the control nodes 2 and 4 may build a cluster in the channel 2 (a method for building being as described above, and being not going to be described herein any further), determine cluster control information of the cluster and beacon scheduling periods of themselves, and transmit a beacon frame containing the cluster control information at the beacon scheduling periods of themselves, thereafter, they switch to the operating channel, build a cluster in the operating channel (a method for building being as described above, and being not going to be described herein any further), determine cluster control information of the cluster of the operating channel and beacon scheduling periods of themselves, and transmit a beacon frame containing the cluster control information of the cluster of the operating channel at the beacon scheduling periods of themselves.

With the method of the above implementation of this embodiment, as the cluster interval of the overlapped large channel is different from the cluster interval of the operation channel, interference between the overlapped channels may be lowered.

In other implementations of the embodiment of the present disclosure, the beacon scheduling information of the control node of the small channel may be added into the beacon frame transmitted in the overlapped large channel after the control node switched to the overlapped large channel, or the beacon scheduling information of the control node of the large channel may be added into the beacon frame transmitted in the operating channel. The beacon scheduling information of the control node may be stored and added in a manner shown in Table 1. As shown in Table 1, one entry of beacon scheduling information of a control node includes an address of a transmission node of a beacon frame, scheduling starting time, scheduling duration and a scheduling channel number.

Table 1

| Address of a transmission node of a beacon frame | Starting time | Duration | Scheduling channel number |
|---|---|---|---|

In this implementation, the scheduling starting time refers to starting time for transmitting the beacon frame by the transmission node of the beacon frame, the scheduling duration refers to duration for transmitting the beacon frame by the transmission node of the beacon frame, and the scheduling channel number refers to the number of a channel for transmitting the beacon frame by the transmission node of the beacon frame. The items contained in the above beacon scheduling information are illustrative only, and in particular implementation, items may be added according to an actual situation, and the embodiment of the present disclosure is not limited thereto.

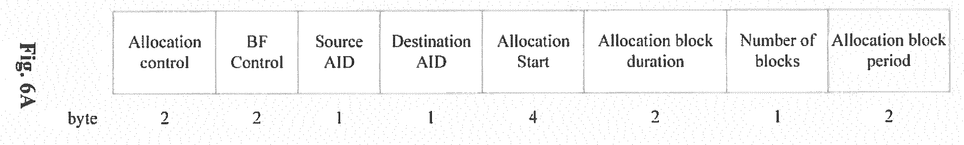

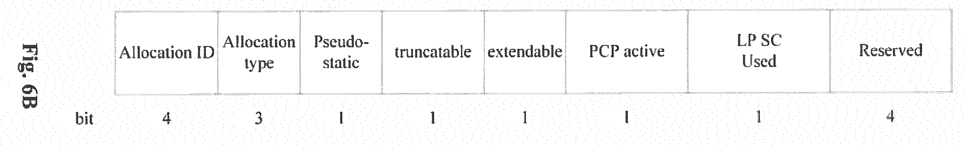

FIG 6A shows a scheduling information denoting format of the IEEE 802.11ad, and FIG. 6B shows a scheduling information control field format of the IEEE 802.11ad. As shown in FIGs. 6A and 6B, in the IEEE 802.11 ad Standard, a transmission scheduling information denoting method is provided. The scheduling information denoting method shown in Fig. 6A contains an address of a transmission node, scheduling starting time and scheduling duration, but contains no field indicating a scheduling channel number. In the scheduling control fields shown in Fig. 6B, the twelfth bit to the fifteenth bit are reserved fields, and in this embodiment, the four reserved fields may be used for indicating a scheduling channel number.

This implementation shall be described below with reference to Embodiment 2 and Embodiment 3, respectively.

Embodiment 2

An embodiment of the present disclosure further provides a method for transmitting a beacon frame, with a difference from Embodiment 1 being that in this embodiment, when the control node switches to the overlapped large channel and transmits the beacon frame containing the cluster control information of the overlapped large channel in the determined beacon scheduling period, it adds the beacon scheduling information selected by the synchronization control node of the operating channel (referred to as synchronization beacon scheduling information) into the beacon frame, so that other control nodes of the overlapped large channel can avoid transmitting data by using or scheduling a channel at a time designated by the beacon scheduling information after receiving the beacon frame, thereby further lowering interference resulted from inter-channel overlapping.

In this embodiment, as a synchronization control node in the operating channel, when the control node switches to the overlapped large channel to transmit the beacon frame, its synchronization beacon scheduling information in the operating channel may be added into the beacon frame for transmission. In this embodiment, the synchronization beacon scheduling information refers to synchronization beacon scheduling information (ClusterTimeOffset(1)) of a cluster of the operating channel to be finished in a beacon interval of the overlapped large channel.

In this embodiment, the synchronization beacon scheduling information may also be stored and added in a manner of listing, as shown in Table 2, the synchronization beacon scheduling information may be stored in a manner of beacon scheduling list, which may contain at least one information entry, each information entry containing an address of a synchronization control node, starting time, duration and an operating channel number. Similar to the beacon scheduling information shown in Table 1, the above items are illustrative only, and this embodiment is not limited thereto. And the meanings of the items are identical to those of the beacon scheduling information shown in Table 1, and shall not be described herein any further.

Table 2

| Address of a synchronization control node | Starting time 1 | Duration 1 | Operating channel number |
|---|---|---|---|
| Address of a synchronization control node | Starting time 2 | Duration 2 | Operating channel number |
| ... | ... | ... | ... |

In this embodiment, as the synchronization control node may possibly transmit beacon frames twice or more in one beacon interval of the operating channel corresponding to one beacon interval of the overlapped large channel, the beacon scheduling information contains a beacon scheduling period to which each time of transmission of the beacon frames corresponds. As shown in Table 2, as a transmission node transmitting the beacon frames twice or more is the synchronization control node, the scheduling channel number is an operating channel number of the synchronization control node. Therefore, the addresses of the beacon transmission nodes shown in Table 2 are all addresses of synchronization control nodes, and their operating channels are identical.

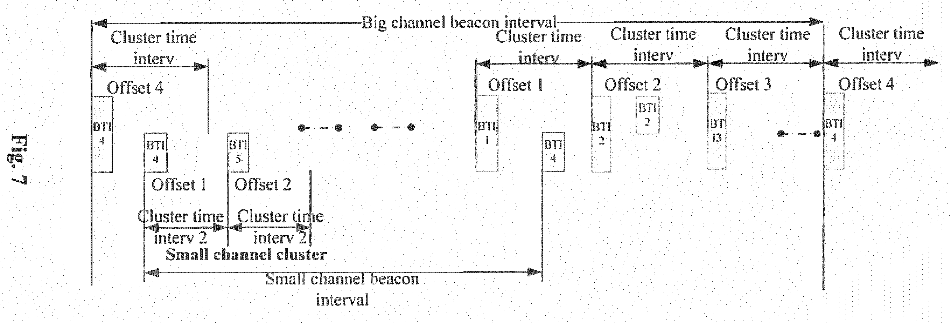

FIG 7 is a schematic diagram of comparison between the beacon interval of the operating channel and the beacon interval of the overlapped large channel according to this implementation. For the sake of convenience of description, in the following description, the operating channel is referred to as a small channel, and the overlapped large channel is referred to as a large channel. As shown in FIG. 7, the control node 4 operates in the small channel 6, and in a beacon interval of a current large channel, the node 4 needs to transmit beacon frames twice in the small channel according to a rule of small channel cluster, hence, beacon scheduling information of the beacon frames transmitted twice needs to be contained in beacon frames transmitted by the node 4 in the large channel for broadcasting. After receiving the beacon scheduling information, other control nodes of the large channel may avoid performing transmission by using or scheduling a channel at a time designated by the beacon scheduling information, thus the interference is lowered.

In this implementation, a relationship between the beacon interval of the large channel and the beacon interval of the small channel is not limited, for example, the beacon interval of the large channel may be greater than or less than or equal to the beacon interval of the small channel.

In this implementation, besides the contents shown in Table 2, the beacon scheduling information may further contain other information provided in expanded scheduling elements provided in the IEEE 802.11ad Standard, and this embodiment is not limited thereto.

In this implementation, a beacon frame format and the cluster control information may also be in consistence with those provided in the IEEE 802.11ad Standard, and this embodiment is not limited thereto.

With this implementation, before the synchronization control node of the cluster of the small channel switches to the large channel at a predefined time to transmit beacon frames, beacon scheduling information to be transmitted in the small channel within a beacon interval of a current large channel is contained in the beacon frames of the large channel.

Thus, after receiving the beacon frames containing the beacon scheduling information, the nodes operating in the large channel may avoid transmission at a contained scheduled time or avoid transmission by scheduling other devices at the contained scheduled time.

And after the synchronization control node operating in the small channel switches to the large channel at a predefined time and receives the above beacon frames containing the beacon scheduling information, if the scheduling channel number is different from the operating channel number, the transmission may be performed in the operating channel at the contained scheduled time or other devices may be scheduled to transmit at the above time. Taking the example shown in FIG. 7 as an example, an operating channel number of the node 2 is 5, an operating channel number of the node 4 is 6, the beacon frames transmitted by the node 4 after it switches to the channel 2 contain two times of beacon scheduling of itself in the channel 6, and the channel numbers designated by information on the two times of beacon scheduling are 6. In such a case, the node 2 switches to the large channel 2 to receive the above beacons, and finds that the channel number 6 designated by the beacon scheduling information contained therein is different from the operating channel number 5 of itself. Hence, the node 2 may use a channel in the channel 5 or schedule other devices to use a channel at a corresponding time, with no interference between the channels 5 and 6.

With the method of this embodiment, interference between the overlapped channels is further avoided.

Embodiment 3

An embodiment of the present disclosure further provides a method for transmitting a beacon frame, with a difference from Embodiment 1 being that in this embodiment, after the control node joins in the cluster of the overlapped large channel as a synchronization control node or a member control node, and switches to the large channel at the beacon scheduling time of the cluster of the overlapped large channel, it monitors the overlapped large channel, judges whether the beacon scheduling time is occupied if a beacon frame is received, and judges that the beacon scheduling time is not occupied if no beacon frame is received when the MaxBeaconTime expires. After expiration or beacon reception is completed, the control node switches back to the operating channel. The beacon scheduling time occupied in the cluster of the overlapped large channel is taken as beacon scheduling information and stored, so that the occupied beacon scheduling time in the cluster of the overlapped large channel is added into the beacon frame when the beacon frame is transmitted in the operating channel. Hence, other devices in the operating channel can avoid data transmission at the occupied beacon scheduling time of the overlapped large channel or avoid data transmission by scheduling other devices at the beacon scheduling time of the overlapped large channel after receiving the beacon frame, thereby further lowering interference resulted from inter-channel overlapping.

In this embodiment, the occupied beacon scheduling time in the cluster of the overlapped large channel, i.e. the above-described beacon scheduling information, may be stored in a manner of beacon scheduling list, and Table 3 is an example of the beacon scheduling list. As shown in Table 3, the beacon scheduling list includes at least one entry, each entry containing an address of a beacon frame transmission node, starting time, duration and a channel number of an overlapped large channel overlapping with an operating channel. Similar to Table I or Table 2, for items in each entry, this embodiment is not limited thereto, and other items may be added according to an actual situation.

Table 3

| Address of a beacon frame transmission node | Starting time 1 | Duration 1 | Channel number of an overlapped large channel |
|---|---|---|---|
| Address of a beacon frame transmission node | Starting time 2 | Duration 2 | Channel number of an overlapped large channel |
| ... | ... | ... | ... |

In this embodiment, in a beacon interval of a small channel, a beacon scheduling period corresponding to the overlapped large channel may possible be occupied by identical control nodes in the overlapped large channel, and may also possible be occupied by different control nodes in the overlapped large channel, the control nodes in the overlapped large channel may occupy one beacon scheduling period, and may also occupy more beacon scheduling periods. Hence, there may be multiple entries in Table 3, and information items in each entry may be different according to different nodes occupying the beacon scheduling periods and different times of the nodes for transmitting the beacon frames. In this embodiment, after the control node transmit the beacon frame containing the above beacon scheduling information in the operating channel, the beacon scheduling list may be cleared. Thereafter, in an immediate beacon interval, collection of occupied beacon scheduling information of the overlapped large channel is continued in the above manner.

With the method of this embodiment, the control node avoids transmission at the beacon scheduling period of the overlapped large channel overlapping with its operating channel in transmitting the beacon frame in the operating channel, thereby lowering interference resulted from inter-channel overlapping.

The method for transmitting a beacon frame of the embodiments of the present disclosure is described in detail with reference to embodiments 1, 2 and 3. These three embodiments are not isolated, and may be combined arbitrarily, a combined solution being also covered by the protection scope of the embodiments of the present disclosure.

An embodiment of the present disclosure further provides a control node, as described in Embodiment 4 below. As principles for solving problems of the control node is similar to those of the methods of embodiments 1, 2 and 3, implementations of the methods of embodiments 1, 2 and 3 may be referred to for the implementation of the control node, with identical contents being not going to be described herein any further.

Embodiment 4

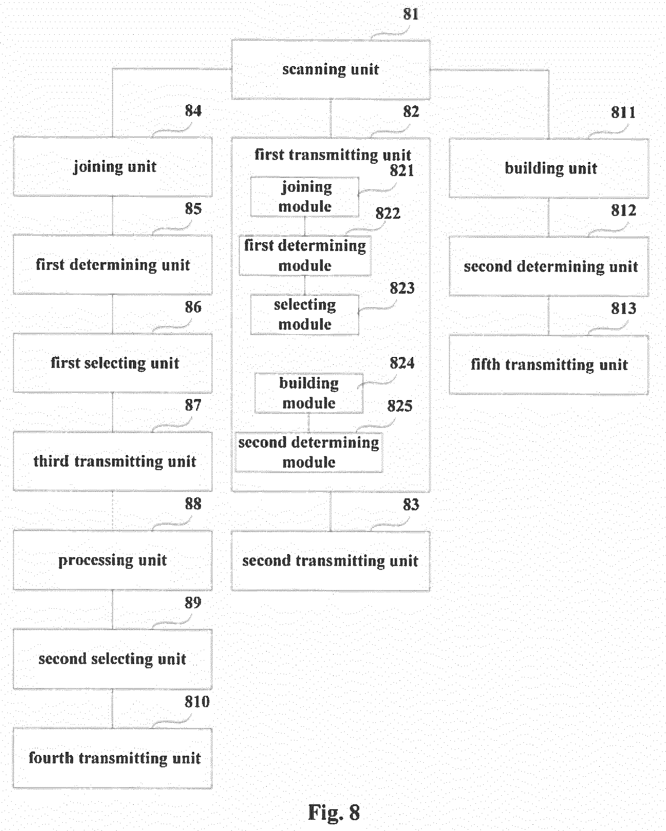

An embodiment of the present disclosure further provides a control node, and FIG. 8 is a schematic diagram of a structure of the control node. Referring to FIG. 8, the control node includes:

a scanning unit 81 configured to determine an operating channel by scanning channels;
a first transmitting unit 82 configured to switch to an overlapped large channel if there exists no cluster in the operating channel and there exists the overlapped large channel which is overlapped with the operating channel and has a channel bandwidth larger than that of the operating channel, determine cluster control information and a beacon scheduling period of the overlapped large channel, and transmit a beacon frame including the cluster control information of the overlapped large channel at a beacon scheduling period in each beacon interval of the overlapped large channel; and
a second transmitting unit 83 configured to switch to the operating channel after the first transmitting unit finishes the transmission of the beacon frame, build a cluster in the operating channel, determine cluster control information and a beacon scheduling period of the operating channel, a cluster interval of the operating channel being different from that of the overlapped large channel, and transmit a beacon frame including the cluster control information of the operating channel at a beacon scheduling period in each beacon interval of the operating channel.

In an implementation of this embodiment, the first transmitting unit 82 includes:

a joining module 821 configured to, if there exists a cluster in the overlapped large channel, join in the cluster of the overlapped large channel;
a first determining module 822 configured to get the cluster control information of the overlapped large channel from a received beacon frame transmitted by a synchronization control node of the cluster of the overlapped large channel; and
a selecting module 823 configured to select one of idle beacon scheduling periods of the overlapped large channel and take it as the beacon scheduling period for transmitting a beacon frame including the cluster control information of the overlapped large channel.

In another implementation of this embodiment, the first transmitting unit 82 includes:

a building module 824 configured to build a cluster in the overlapped large channel if there exists no cluster in the overlapped large channel; and
a second determining module 825 configured to determine the cluster control information and the beacon scheduling period of the cluster of the overlapped large channel.

In an implementation of this embodiment, the control node further includes:

a joining unit 84 configured to, if there exists a cluster in the operating channel, join in the cluster of the operating channel;
a first determining unit 85 configured to get the cluster control information of the operating channel from a received beacon frame transmitted by a synchronization control node of the cluster of the operating channel;
a first selecting unit 86 configured to select one of idle beacon scheduling periods of the operating channel and take it as the beacon scheduling period for transmitting the beacon frame including the cluster control information of the operating channel; and
a third transmitting unit 87 configured to transmit the beacon frame including the cluster control information of the operating channel at a beacon scheduling period in each beacon interval.

In a particular implementation of this implementation, the control node further includes:

a processing unit 88 configured to terminate transmission of the beacon frame including the cluster control information of the operating channel at the selected beacon scheduling period if an interference level exceeds a predefined value;
a second selecting unit 89 configured to reselect one of the idle beacon scheduling periods of the operating channel and take it as the beacon scheduling period for periodically transmitting a beacon frame including the cluster control information of the operating channel; and
a fourth transmitting unit 810 configured to transmit the beacon frame including the cluster control information of the operating channel at the reselected beacon scheduling period in each beacon interval of the operating channel.

In another implementation of this embodiment, the control node further includes:

a building unit 811 configured to build a cluster in the operating channel if there exists no cluster in the operating channel and there exists no overlapped large channel which is overlapped with the operating channel and has a channel bandwidth larger than that of the operating channel;
a second determining unit 812 configured to determine the cluster control information and the beacon scheduling period of the built cluster of the operating channel; and
a fifth transmitting unit 813 configured to transmit the beacon frame including the cluster control information of the operating channel at a beacon scheduling period in each beacon interval.

In an implementation of this embodiment, the beacon frame including the cluster control information of the overlapped large channel transmitted at a beacon scheduling period in each beacon interval of the overlapped large channel further includes: synchronization beacon scheduling information of the cluster of the operating channel; and wherein the synchronization beacon scheduling period information of the cluster of the operating channel includes at least one information entry, each information entry including the address of a synchronization control node of the cluster of the operating channel, starting time, duration and an operating channel number.

In another implementation of this embodiment, the beacon frame including the cluster control information of the operating channel transmitted at a beacon scheduling period in each beacon interval of the operating channel further includes: occupied beacon scheduling period information of the cluster of the overlapped large channel; and wherein the occupied beacon scheduling period information of the cluster of the overlapped large channel includes at least one information entry, each information entry including an address of a beacon frame transmission node, starting time, duration, and a channel number of the overlapped large channel.

With the control node of the embodiment of the present disclosure, the synchronization control node of the cluster of the small channel joins in the cluster of the large channel, and determines the beacon scheduling period of the small channel according to the beacon scheduling period of the cluster of the large channel, thereby making the transmission of the beacons of the small channel staggered with the beacon scheduling period of the large channel and lowering interference.

An embodiment of the present disclosure further provides a computer-readable program, wherein when the program is executed in a control node, the program enables a computer to carry out the method for transmitting a beacon frame as described in any one of embodiments 1-3 in the control node.

An embodiment of the present disclosure further provides a storage medium in which a computer-readable program is stored, wherein the computer-readable program enables a computer to carry out the method for transmitting a beacon frame as described in any one of embodiments 1-3 in a control node.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

**Claims**

1. A method for transmitting a beacon frame, comprising:

   determining an operating channel by channel scanning;
   switching to an overlapped large channel if there exists no cluster in the operating channel and there exists the overlapped large channel which is overlapped with the operating channel and has a channel bandwidth larger than that of the operating channel, determining cluster control information and a beacon scheduling period of the overlapped large channel, and transmitting a beacon frame comprising the cluster control information of the overlapped large channel at a beacon scheduling period in each beacon interval of the overlapped large channel; and
   switching to the operating channel, building a cluster in the operating channel, determining cluster control information and a beacon scheduling period of the operating channel, a cluster interval of the operating channel being different from that of the overlapped large channel, and transmitting a beacon frame comprising the cluster control information of the operating channel at a beacon scheduling period in each beacon interval of the operating channel.

2. The method according to claim 1, wherein if there exists a cluster in the overlapped large channel, the determining cluster control information and a beacon scheduling period of the overlapped large channel comprises:

   joining in the cluster of the overlapped large channel;
   getting the cluster control information of the overlapped large channel from a received beacon frame transmitted by a synchronization control node of the cluster of the overlapped large channel; and
   selecting one of idle beacon scheduling periods of the overlapped large channel and taking it as the beacon scheduling period for periodically transmitting the beacon frame comprising the cluster control information of the overlapped large channel.

3. The method according to claim 1, wherein if there exists no cluster in the overlapped large channel, the determining cluster control information and a beacon scheduling period of the overlapped large channel comprises:

   building a cluster in the overlapped large channel, and determining the cluster control information and the beacon scheduling period of the cluster of the overlapped large channel.

4. The method according to claim 1, wherein if there exists a cluster in the operating channel, the method further comprises:

   joining in the cluster of the operating channel;
   getting the cluster control information of the operating channel from a received beacon frame transmitted by a synchronization control node of the cluster of the operating channel;

selecting one of idle beacon scheduling periods of the operating channel and taking it as the beacon scheduling period for periodically transmitting the beacon frame comprising the cluster control information of the operating channel; and

transmitting the beacon frame comprising the cluster control information of the operating channel at the beacon scheduling period in each beacon interval.

5. The method according to claim 4, wherein if an interference level exceeds a predefined value, the method further comprises:

terminating transmission of the beacon frame comprising the cluster control information of the operating channel at the selected beacon scheduling period;

reselecting one of the idle beacon scheduling periods of the operating channel and taking it as the beacon scheduling period for periodically transmitting the beacon frame comprising the cluster control information of the operating channel; and

transmitting the beacon frame comprising the cluster control information of the operating channel at the reselected beacon scheduling period in each beacon interval of the operating channel.

6. The method according to claim 1, wherein if there exists no cluster in the operating channel and there exists no overlapped large channel which is overlapped with the operating channel and has a channel bandwidth larger than that of the operating channel, the method further comprises:

building a cluster in the operating channel;

determining cluster control information and a beacon scheduling period of the built cluster of the operating channel; and

transmitting a beacon frame comprising the cluster control information of the operating channel at a beacon scheduling period in each beacon interval.

7. The method according to claim 1, wherein the beacon frame comprising the cluster control information of the overlapped large channel transmitted at a beacon scheduling period in each beacon interval of the overlapped large channel further comprises: synchronization beacon scheduling information of the cluster of the operating channel; and wherein the synchronization beacon scheduling information of the cluster of the operating channel comprises at least one information entry, each information entry comprising an address of a synchronization control node of the cluster of the operating channel, starting time, duration and an operating channel number.

8. The method according to claim 1, wherein the beacon frame comprising the cluster control information of the operating channel transmitted at a beacon scheduling period in each beacon interval of the operating channel further comprises: occupied beacon scheduling period information of the cluster of the overlapped large channel; and wherein the occupied beacon scheduling period information of the cluster of the overlapped large channel comprises at least one information entry, each information entry comprising the address of a beacon frame transmission node, starting time, duration and a channel number of the overlapped large channel.

9. A control node, comprising:

a scanning unit configured to scan available channels so as to determine an operating channel;

a first transmitting unit configured to switch to an overlapped large channel if there exists no cluster in the operating channel and there exists the overlapped large channel which is overlapped with the operating channel and has a channel bandwidth larger than that of the operating channel, determine cluster control information and a beacon scheduling period of the overlapped large channel, and transmit a beacon frame comprising the cluster control information of the overlapped large channel at a beacon scheduling period in each beacon interval of the overlapped large channel; and

a second transmitting unit configured to switch to the operating channel after the first transmitting unit finishes the transmission of the beacon frame, build a cluster in the operating channel, determine cluster control information and a beacon scheduling period of the operating channel, a cluster interval of the operating channel being different from that of the overlapped large channel, and transmit a beacon frame comprising the cluster control information of the operating channel at a beacon scheduling period in each beacon interval of the operating channel.

10. The control node according to claim 9, wherein the first transmitting unit comprises:

a joining module configured to, if there exists a cluster in the overlapped large channel, join in the cluster of the overlapped large channel;
a first determining module configured to get the cluster control information of the overlapped large channel from a received beacon frame transmitted by a synchronization control node of the cluster of the overlapped large channel; and
a selecting module configured to select one of idle beacon scheduling periods of the overlapped large channel and take it as the beacon scheduling period for transmitting a beacon frame comprising the cluster control information of the overlapped large channel.

11. The control node according to claim 9, wherein the first transmitting unit comprises:

a building module configured to build a cluster in the overlapped large channel if there exists no cluster in the overlapped large channel; and
a second determining module configured to determine the cluster control information and the beacon scheduling period of the cluster of the overlapped large channel.

12. The control node according to claim 9, wherein the control node further comprises:

a joining unit configured to, if there exists a cluster in the operating channel, join in the cluster of the operating channel;
a first determining unit configured to get the cluster control information of the operating channel from a received beacon frame transmitted by a synchronization control node of the cluster of the operating channel;
a first selecting unit configured to select one of idle beacon scheduling periods of the operating channel and take it as the beacon scheduling period for transmitting the beacon frame comprising the cluster control information of the operating channel; and
a third transmitting unit configured to transmit the beacon frame comprising the cluster control information of the operating channel at a beacon scheduling period in each beacon interval.

13. The control node according to claim 12, wherein the control node further comprises:

a processing unit configured to terminate transmission of the beacon frame comprising the cluster control information of the operating channel at the selected beacon scheduling period if an interference level exceeds a predefined value;
a second selecting unit configured to reselect one of the idle beacon scheduling periods of the operating channel and take it as the beacon scheduling period for periodically transmitting a beacon frame comprising the cluster control information of the operating channel; and
a fourth transmitting unit configured to transmit the beacon frame comprising the cluster control information of the operating channel at the reselected beacon scheduling period in each beacon interval of the operating channel.

14. The control node according to claim 9, wherein the control node further comprises:

a building unit configured to build a cluster in the operating channel if there exists no cluster in the operating channel and there exists no overlapped large channel which is overlapped with the operating channel and has a channel bandwidth larger than that of the operating channel;
a second determining unit configured to determine the cluster control information and the beacon scheduling period of the built cluster of the operating channel; and
a fifth transmitting unit configured to transmit the beacon frame comprising the cluster control information of the operating channel at a beacon scheduling period in each beacon interval.

15. The control node according to claim 9, wherein the beacon frame comprising the cluster control information of the overlapped large channel transmitted at a beacon scheduling period in each beacon interval of the overlapped large channel further comprises:

synchronization beacon scheduling information of the cluster of the operating channel; and
wherein the synchronization beacon scheduling period information of the cluster of the operating channel comprises at least one information entry, each information entry comprising the address of a synchronization control node of the cluster of the operating channel, starting time, duration and an operating channel number.

**16.** The control node according to claim 9, wherein the beacon frame comprising the cluster control information of the operating channel transmitted at a beacon scheduling period in each beacon interval of the operating channel further comprises: occupied beacon scheduling period information of the cluster of the overlapped large channel; and wherein the occupied beacon scheduling period information of the cluster of the overlapped large channel comprises at least one information entry, each information entry comprising an address of a beacon frame transmission node, starting time, duration, and a channel number of the overlapped large channel.

**17.** A computer-readable program, wherein when the program is executed in a control node, the program enables a computer to carry out the method for transmitting a beacon frame as claimed in any one of claims 1-8 in the control node.

**18.** A storage medium in which a computer-readable program is stored, wherein the computer-readable program enables a computer to carry out the method for transmitting a beacon frame as claimed in any one of claims 1-8 in a control node.

Fig. 1

Fig. 2

Fig. 3

401

an operating channel is determined by channel scanning

402

a beacon frame is transmitted in an overlapped large channel overlapping with the operating channel and having a channel bandwidth greater than that of the operating channel

403

the beacon frame is transmitted in the operating channel

Fig. 4

Fig. 5

| Allocation control | BF Control | Source AID | Destination AID | Allocation Start | Allocation block duration | Number of blocks | Allocation block period |
|---|---|---|---|---|---|---|---|
| 2 | 2 | 1 | 1 | 4 | 2 | 1 | 2 |

byte

Fig. 6A

| Allocation ID | Allocation type | Pseudo-static | truncatable | extendable | PCP active | LP SC Used | Reserved |
|---|---|---|---|---|---|---|---|
| 4 | 3 | 1 | 1 | 1 | 1 | 1 | 4 |

bit

Fig. 6B

Fig. 7

Fig. 8

# INTERNATIONAL SEARCH REPORT

International application No.

**PCT/CN2013/083030**

## A. CLASSIFICATION OF SUBJECT MATTER

H04W 16/10 (2009.01) i

According to International Patent Classification (IPC) or to both national classification and IPC

## B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT; CNABS; VEN: beacon frame, cluster?, bandwidth, beacon scheduling, interval?, beacon?, channel

## C. DOCUMENTS CONSIDERED TO BE RELEVANT

| Category* | Citation of document, with indication, where appropriate, of the relevant passages | Relevant to claim No. |
|---|---|---|
| X | CN 103179572 A (HUAWEI TECHNOLOGIES CO., LTD.), 26 June 2013 (26.06.2013), description, paragraphs 10, 13-17, 27, 48 and 49 | 1, 9, 17, 18 |
| A | CN 103118406 A (HUAWEI TECHNOLOGIES CO., LTD.), 22 May 2013 (22.05.2013), the whole document | 1-18 |
| A | EP 2109960 A1 (SK TELECOM CO., LTD.), 21 October 2009 (21.10.2009), the whole document | 1-18 |

☐ Further documents are listed in the continuation of Box C. ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 01 June 2014 (01.06.2014) | **16 June 2014 (16.06.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WU, Jiangxia** Telephone No.: (86-10) **62412034** |
|---|---|

Form PCT/ISA/210 (second sheet) (July 2009)

# INTERNATIONAL SEARCH REPORT
## Information on patent family members

| International application No. |
| --- |
| **PCT/CN2013/083030** |

| Patent Documents referred in the Report | Publication Date | Patent Family | Publication Date |
| --- | --- | --- | --- |
| CN 103179572 A | 26 June 2013 | None | |
| CN 103118406 A | 22 May 2013 | None | |
| EP 2109960 A1 | 21 October 2009 | EP 2109960 A4 | 18 December 2013 |
| | | KR 20080075806 A | 19 August 2008 |
| | | WO 2008100078 A1 | 21 August 2008 |
| | | CN 101589577 A | 25 November 2009 |
| | | CN 101589577 B | 20 June 2012 |
| | | JP 2010518728 A | 27 May 2010 |
| | | US 2010111048 A1 | 06 May 2010 |

Form PCT/ISA/210 (patent family annex) (July 2009)